# EUROPÄISCHE PATENTSCHRIFT

(11) **EP 2 313 283 B1**
(45) Veröffentlichungstag und Bekanntmachung des Hinweises auf die Patenterteilung: **27.03.2013**
(21) Anmeldenummer: 09780551.9
(22) Anmeldetag: 14.07.2009
(51) Int. Cl.: B60B 27/00, F16C 33/80

(54) **RADTRÄGER MIT VORDICHTUNG**
STEERING KNUCKLE WITH PRE-SEALING
SUPPORT DE ROUE AVEC PRÉJOINT

(30) Priorität: 12.08.2008 DE 102008038682
(43) Veröffentlichungstag der Anmeldung: 27.04.2011
(73) Patentinhaber: Schaeffler Technologies AG & Co. KG, 91074 Herzogenaurach (DE)
(72) Erfinder: WALTER, Wilhelm, 97490 Poppenhausen (DE); HARTMANN, Erwin, 97493 Bergrheinfeld (DE)
(86) Internationale Anmeldenummer: PCT/EP2009/058969
(87) Internationale Veröffentlichungsnummer: WO 2010/018041

(56) Entgegenhaltungen:
- EP-A2- 1 890 046
- WO-A1-03/071148
- WO-A1-2009/057269
- DE-A1- 10 009 216
- DE-A1-102004 048 654
- JP-A- 2007 132 454
- JP-A- 2007 192 392
- US-A- 5 240 333

## Beschreibung

### Gebiet der Erfindung

Die Erfindung betrifft einen Radträger, der zur Aufnahme eines Außenringes eines Radlagers vorgesehen ist, sowie eine Radlageranordnung mit einem derartigen Radträger.

### Stand der Technik

Radträger finden bereits eine vielfältige Anwendung im Kraftfahrzeugbereich. Ein Radträger hat innerhalb der Radlageranordnung die Funktion das Radlager fest mit dem Fahrgestell oder der Karosserie eines Nutzkraftwagens (NKW), eines Personenkraftwagens (PKW) oder auch eines Kraftrades zu verbinden.

Bei der Fertigung heutiger Kraftfahrzeuge setzt man verstärkt auf bereits vorinstallierte Baugruppen, die meist auf einfachere Weise mit dem Fahrzeug verbundenen, angeschlossen oder installiert werden können. Entsprechendes gilt für den Radträger, in welchen in der Regel eine Radlagereinheit integrierbar ist und der zusammen mit dieser montiert wird. Dabei wird die Radlagereinheit an ein Antriebsmoment übertragendes Bauteil angeschlossen. Ein derartiges Bauteil könnte eine Welle oder eine Gelenkglocke sein, die beispielsweise über eine Längsverzahnung oder eine Stirnverzahnung den gewünschten Formschluss für eine Drehmomentübertragung gewährleistet.

Jedoch gerade diese Schnittstellen, die für den Herstellungsprozess so einfach wie möglich gestaltet werden sollen, können sich als problematisch herausstellen, wenn es um Umwelteinflüsse während des Betriebes geht. So befindet sich die besagte mechanische Schnittstelle regelmäßig in der Nähe einer getriebeseitigen (auch fahrzeugseitigen) Dichtungsanordnung des Radlagers und ist gegen Umwelteinflüsse nur unzureichend geschützt.

### Hintergrund der Erfindung

Aus US 2002/0049091 A1 ist eine Radlagereinheit bekannt, bei der das Radlager über einen flachen Wälzbund mit der Gelenkglocke verschraubt ist und über eine Längsverzahnung im Betrieb gesetzt werden kann. Die getriebeseitige Dichtungsanordnung des zweireihigen Schrägkugellagers wird mit einer Kassettendichtung realisiert, die im Vergleich zu Dichtungsanordnungen mit Dicht- und Schleuderring eine erhöhte Dichtwirkung erzielt.

Die Lehre des derzeitigen Stand der Technik zielt folglich auf auf die Erhöhung der Dichtwirkung der getriebeseitigen Dichtungsanordnung ab, um das Eindringen von Fremdpartikeln in das Radlager zu vermeiden, was zu deutlichen Einbußen bei der Lebensdauer des Radlagers führen kann.

Aus der gattungsgemäßen DE 92 03 402 U ist eine Lagerdichtung von Kraftfahrzeugen bekannt, die im Rahmen einer radseitigen Dichtungsanordnung ein Ringelement aufweist, welches am Außenring des Radlagers befestigt ist und eine umfängliche Ableitung von Schmutzpartikeln ermöglicht.

Grundsätzlich besteht ein ähnliches Problem an der radseitigen Dichtungsanordnung, genau wie an der getriebeseitigen Dichtungsanordnung, jedoch wird durch die Nähe und Größe der Felge und auch der Bremsscheibe eine sehr gute Abschirmung gegen Umwelteinflüsse, ähnlich wie bei einer Labyrinthdichtung, bereits erzielt. Umso größer ist das Problem bei der sehr beanspruchten getriebeseitigen Dichtungsanordnung.

Zudem muss betont werden, dass eine Maßnahme, die auf eine Erhöhung der Dichtwirkung einer der beiden Dichtungsanordnungen abzielt, in der Regel zu einem erhöhten Reibemoment der Dichtung, beziehungsweise deren Dichtlippen, und damit zwangsläufig zu einem erhöhten Kraftstoffverbrauch führt.

### Aufgabenstellung

### Zusammenfassung der Erfindung

Die Aufgabe der Erfindung ist daher die Umwelteinflüsse auf wenigstens eine Dichtungsanordnung eines Radlagers substantiell zu reduzieren.

Die Aufgabe wird durch einen Radträger der eingangs genannten Art dadurch gelöst, dass der Radträger zum Schutz einer Dichtungsanordnung des Radlagers eine Auffangrinne aufweist, die zum Auffangen und umfänglichen Ableiten von Flüssigkeiten, insbesondere Wasser, und Schmutzpartikeln vorgesehen ist. Die Aufgabe wird weiter gelöst mit einer Radlageranordnung, die einen derartigen Radträger aufweist.

Der Erfindung liegt die Erkenntnis zu Grunde, dass sich bisherige Lösungen nur auf erhöhte Dichtwirkungen beschränken, die direkt an der Radlagerdichtung zwischen Innenring und Außenring ansetzen.

Erfindungsgemäß ist die Radlageranordnung zur Aufnahme eines Außenringes eines Radlagers und zum Schutz einer Dichtungsanordnung des Radlagers vorgesehen. Hierfür weist die Radlageranordnung, insbesondere ein Ratträger der Radlageranordnung, eine Vordichtung auf, die zur Entlastung beziehungsweise Schutz der Dichtungsanordnung des Radlagers vorgesehen ist. Eine derartige Vordichtung ist insbesondere bei getriebeseitigen Dichtungsanordnungen von Nutzen, kann jedoch auch zum Schutz einer radseitigen Dichtungsanordnung, beziehungsweise beider Dichtungsanordnungen eingesetzt werden.

Die gesamte oder auch nur ein Teil der Vordichtung wird als Auffangrinne am Radträger ausgebildet, die zum Auffangen und umfänglichen Ableiten von Schmutzpartikeln vorgesehen ist. Die Auffangrinne kann hierfür in der Nähe der getriebeseitigen Dichtungsanordnung und/oder einer radseitigen Dichtungsanordnung vorgesehen sein. In beiden Fällen soll Spritzwasser, welches während des Betriebes an den Radträger gelangt ist, von der jeweiligen Dichtungsanordnung fern gehalten werden, indem sich der Schmutz bzw. das Wasser in der Auffangrinne sammelt und von dieser in Umfangsrichtung um die Drehachse des Radlagers geleitet wird, um schließlich auf die Fahrbahn abgeleitet zu werden.

Eine Auffangrinne bildet somit einen Beruhigungsraum oder Stauraum, dessen radialer Durchmesser größer ist als der der Dichtungsanordnung im Radlager, aber vorteilhafterweise kleiner, als die maximale radiale Ausdehnung angrenzender Bauteile wie zum Beispiel der Gelenkglocke. Dies führt dazu, dass sich während des Betriebes Wasser (und damit auch Schmutzpartikel) an der drehenden Gelenkglocke am radial äußersten Punkt sammelt und von dort weggeschleudert wird und gegebenenfalls wieder an den Radträger gelangt, von wo es direkt in die Auffangrinne fließen kann.

Damit kann die Dichtungsanordnung des Radlagers derart geändert werden, dass mit einem Minimum an Dichtwirkung immer noch aufgrund der Vordichtung der gleiche oder ein besserer Dichtungseffekt erzielt werden kann und zusätzlich eine Materialeinsparung an der Dichtungsanordnung möglich ist. Zudem kann auch auf schleifende Dichtungen verzichtet werden, womit der Kraftstoffverbrauch eine deutliche Senkung erfährt.

Bei der vordersten Ausführungsformen kann die Gestaltung der Vordichtung, das heißt insbesondere der Auffangrinne, ohne großen Aufwand durch konstruktive Änderungen der kundenseitigen Bauteile erzeugt werden.

Bei einer vorteilhaften Ausführungsform weist die Radlageranordnung neben dem Radträger eine Radnabe und eine mit der Radnabe verbindbare, insbesondere verschraubbare, Gelenkglocke auf, wobei der Radträger mit der Radnabe und/oder der Radträger mit der Gelenkglocke einen Dichtungsspalt bildet. Der Dichtungsspalt wird hierbei, ganz im Sinne einer Labyrinthdichtungen, derart ausgeführt, dass dieser stellenweise senkrechte, parallele oder kombinierte Orientierungen zur Drehachse des Radlagers einnimmt, um das Eindringen von Wasser und Schmutz beim Fahrzeugbetrieb oder Stillstand wirksam zu verhindern. Hierbei sind die am Dichtungsspalt teilhabenden Bauteile hinsichtlich ihrer Form aufeinander abgestimmt.

Bei einer vorteilhaften Ausführungsform mündet der Dichtungsspalt in die Auffangrinne des Radträgers. Die den Dichtungsspalt formenden Komponenten können hierbei aus der Radnabe und dem Radträger beziehungsweise der Gelenkglocke und dem Radträger oder allen 3 Bauteilen bestehen. Wichtig ist, dass der Dichtspalt in den Beruhigungsraum (Stauraum) der

Auffangrinne gerichtet ist, ohne dass das Wasser der Auffangrinne in den Dichtspalt gelangen kann. Dies gilt sowohl für den Betrieb, als auch für den Stillstand des Fahrzeugs.

Im Stillstand kann das Eindringen von Wasser und Schmutz in den Dichtungsspalt dadurch verhindert werden, dass die Auffangrinne einen geringeren radialen Abstand zur Drehachse des Radlagers aufweist, als die Mündung, beziehungsweise die Mündungsöffnung des Dichtungsspalts. Der in Bezug auf die Fahrbahn obere Teil der Auffangrinne liegt damit weiter unten als die Mündung des Dichtspaltes, womit ein Eindringen in den Dichtspalts durch die Schwerkraft verhindert wird. Zudem läuft das Wasser inklusive Schmutz umfangsseitig in der Auffangrinne, die insgesamt ringförmig ist, ab und gelangt in den fahrbahnzugewandten Teil der Auffangrinne, von dem es dann abtropfen kann.

Während des Fahrbetriebes wird das Eindringen von Wasser und Schmutz dadurch verhindert, dass bei Erschütterungen aufgrund von Oberflächenspannungskräften das Wasser inklusive Schmutz aus der Auffangrinne nicht unmittelbar in den Zwischenraum zwischen Radträger und Gelenkglocke oder zwischen Radträger und Felge geschleudert wird, sondern am Radträger verbleibt und wie auch beim Stillstand des Fahrzeuges über die Auffangrinne umfänglich abfließt. Vorteilhaft in diesem Zusammenhang ist der Umstand, dass der Radträger per se ein feststehendes Bauteil ist, und das aufgefangene Wasser beziehungsweise der Schmutz nicht aus der Auffangrinne hinaus geschleudert werden kann.

Bei einer vorteilhaften Ausführungsform wird die Mündung des Dichtungsspaltes von einem zylindrischen Fortsatz des Radträgers gebildet, dessen maximaler radialer Entfernung von der Drehachse des Radlagers größer ist, als die kleinste radiale Entfernung der Auffangrinne. Ein derartiger zylindrischer Fortsatz kann direkt an den Radträger angeformt sein, das heißt beide Bauteile sind in einem Bauteil verwirklicht.

Bei einer vorteilhaften Ausführungsform ist der Dichtungsspalt in der Nähe des Mündungsbereichs im Wesentlichen parallel zur Drehachse des Lagers angeordnet oder zur Drehachse hin orientiert. Grundsätzlich kann der Neigungswinkel den die Mündung des Dichtungsspaltes mit der Drehachse des Lagers einschließt insofern vorteilhaft gewählt werden, dass lokale Luftströmungs - oder Strömungsverhältnisse berücksichtigt werden können, um einen Eintritt von Wasser und Schmutzpartikeln in den Dichtspalt wirksam zu verhindern. In diesem Zusammenhang ist es gegebenenfalls vorteilhaft die Auffangrinne am Radträger oder auch den Radträger in der Nähe der Auffangrinne unter Strömungsgesichtspunkten auszubilden. So könnte beispielsweise eine ringförmige Anformung am Ratträger verhindern, dass das in der Auffangrinne befindliche Wasser von Luftbewegungen aufgenommen werden kann.

Vorteilhafterweise weist die Radnabe, die Gelenkglocke und/oder einen Teil der Gelenkwelle, eine zylindrische Abdichtung oder einen zylindrischen Fortsatz auf, der zur Bildung des Dichtungsspaltes in der Nähe des Mündungsbereichs vorgesehen ist. Daran ist vorteilhaft, dass aufgrund der Drehbewegung der Gelenkglocke, beziehungsweise der Radnabe, ein Schleudereffekt einsetzt, der das Eindringen von Schmutz, insoweit dieser von der zylindrischen Abdichtung in Richtung Radträger oder sogar in Richtung Auffangrinne weggeschleudert wird, unmöglich macht. Sollte schon eine Verschmutzung des Dichtungsspaltes vorliegen, so kann durch die Drehbewegung eben diese effektiv reduziert werden, indem über die Mündung des Dichtungsspaltes die Schmutzpartikel direkt in die Auffangrinne befördert und abgeleitet werden.

Bei einer vorteilhaften Ausführungsform weist die Gelenkglocke oder die Radnabe ein befestigbares Dichtungselement auf, welches zur Bildung des Dichtungsspaltes in der Nähe des Mündungsbereichs vorgesehen ist und nicht notwendigerweise an die Gelenkglocke, beziehungsweise die Radnabe angeformt sein muss, sondern auch daran befestigt sein kann. Bei der einstückigen Lösung ergibt sich der Vorteil der geringeren Bauteilzahl. Wohingegen sich bei einem separaten Dichtungselement ein struktureller Vorteil ergibt, der es erlaubt die Radlageranordnung einfacher zu montieren und gleichzeitig ein Dichtungselement einzusetzen, welches im Mündungsbereich weit in den Radträger hineinragen kann, weil es eine Deponierung von Wasser und Schmutz beispielsweise in einer verhältnismäßig tiefen Auffangrinne zu gewährleisten. Außerdem wird dadurch die Möglichkeit einer labyrinthartigen Dichtungsspaltführung verbessert und mit ihr auch die Vordichtungswirkung.

Im Zusammenhang mit den bisher genannten Vorteilen ergibt sich ein weiterer Vorteil durch die kaskadenartige Staffelung der Dichtungsanordnung am Radlager in Kombination mit der Vordichtung basierend auf der Auffangrinne. Denn hierdurch werden die Dichtungsanforderungen an die Dichtungsanordnung deutlich reduziert, wenn vorgenannte Ausführungsformen miteinander kombiniert werden. Gegebenenfalls führt dies dazu, dass in der Dichtungsanordnung vorhandene Lippendichtungen mit sehr geringer Überdeckung beziehungsweise einer nahezu 0-Überdeckung ausgeführt werden können ohne auf Dichtleistung verzichten zu müssen. Damit wird das Reibedrehmoment deutlich reduziert und Kraftstoff eingespart.

Weitere bevorzugte Ausführungen und Weiterbildungen der Erfindung sind der Figurenbeschreibung und den Unteransprüchen zu entnehmen.

Es zeigen:
- Fig. 1: eine geschnittene Ansicht einer Radlageranordnung mit einem zweireihigen Schrägkugellager gemäß dem Stand der Technik,
- Fig. 2: eine geschnittene Ansicht einer erfindungsgemäßen Radlageranordnung mit einer getriebeseitigen Dichtungsanordnung mit Vordichtung,
- Fig. 3: eine geschnittene Ansicht einer erfindungsgemäßen Radlageranordnung mit einer Vordichtung basierend auf einem befestigbaren Auffangring, und
- Fig. 4: eine geschnittene Ansicht einer erfindungsgemäßen Radlageranordnung mit einer Vordichtung basierend auf einem befestigbaren Dichtungselement.

### Ausführungsbeispiele

### Beschreibung der Zeichnungen

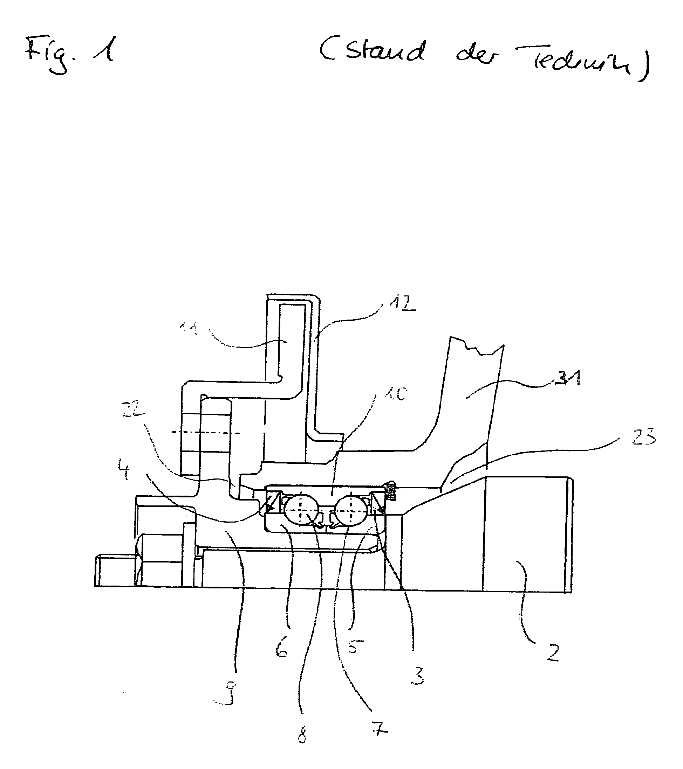

Fig. 1 zeigt eine geschnittene Ansicht einer Radlageranordnung mit einem zweireihigen Schrägkugellager gemäß dem Stand der Technik.

Das Radlager bestehend aus zwei Wälzkörperreihen 7,8, zwei Innenringen 5,6 und einem Außenring 10. Zwischen dem getriebeseitigen Innenring 5 und dem Außenring 10 ist eine Dichtungsanordnung 3 angeordnet, die das Radlager vor Umwelteinflüssen schützt, die durch den getriebeseitigen Spalt 23 zwischen dem Radträger 31 und der Gelenkglocke 2 auf das Radlager einwirken. Entsprechend findet sich eine radseitige Dichtungsanordnung 4 zwischen dem radseitigen Innenring 6 und dem Außenring 10, die vor Umwelteinflüssen schützt, die durch einen radseitigen Spalt 22 zwischen Radnabe 9 und Radträger 31 auf das Radlager wirken. Im Vergleich zum getriebeseitigen Spalt 23 befindet sich der radseitige Spalt 22 in einer relativ geschützten Position, zumal dieser durch den Radflansch der Radnabe 9 beziehungsweise durch die Bremsscheibenanordnung, bestehend aus Bremsscheibe 11 und Schutzblech 12, relativ gut im Sinne einer Labyrinthdichtung vor Umwelteinflüssen geschützt ist.

In Figur 1 sowie auch in den folgenden Figuren korrespondiert radseitig mit links und getriebeseitig mit rechts.

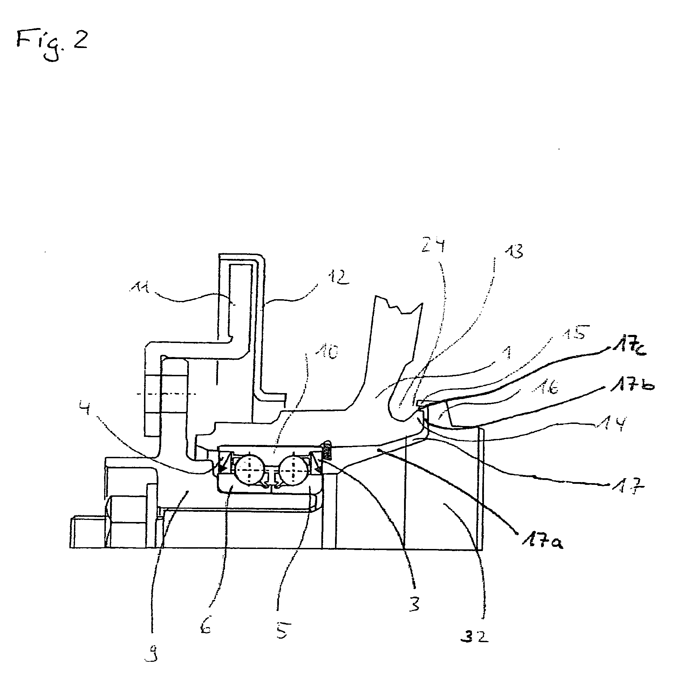

Fig. 2 zeigt eine geschnittene Ansicht einer erfindungsgemäßen Radlageranordnung mit einer getriebeseitigen Dichtungsanordnung 3 mit Vordichtung.

Im gezeigten Ausführungsbeispiel wird eine Eingangsspaltgeometrie gezeigt, die anstelle eines getriebeseitigen Spalts 23 (wie in Figur 1) einen Dichtungsspalt 17 aufweist. Hierbei wurde die Eingangsspaltgeometrie derart abgeändert, dass eine spezielle Form einer Vordichtung auf der Basis einer Labyrinthdichtung entsteht.

Zum einen weist der Radträger 1 eine Auffangrinne 13 auf, deren Tiefe durch einen zylindrischen Fortsatz 14 des Radträgers 1 bestimmt wird. Der zylindrische Fortsatz 14 ist auf die Form der gegenüberliegenden Gelenkglocke 32 abgestimmt, um eine geringe Spaltbreite des Dichtungsspalts 17 zu erreichen. Der Dichtungsspalt 17 wird durch einen Radialspalt 17a, einen Axialspalt 17b und einen weiteren Radialspalt 17c gebildet. Der Radialspalt 17a ist der Anteil des Dichtungsspaltes 17, der, wie in Figur 2 gezeigt, sich nur geringfügig zur Fahrzeugseite hin radial von der Rotationsachse entfernt, um anschließend nach einer Biegung in den Axialspalt 17b überzugehen. Der Axialspalt 17b ist hinsichtlich seiner axialen Ausdehnung sehr begrenzt, was per se bereits dem gesamten Dichtverhalten einträglich ist. In gleicher Weise variiert der Radialspalt 17a in radialer Richtung nur unwesentlich. Jedoch ist es vorteilhaft auch die den Radialspalt 17a definierenden radialen Begrenzungsflächen über die Länge des Radialspalte 17a parallel zur Rotationsachse zu belassen. Dies führt in der Schnittebene zu einer rechtwinkligen Anordnung der beiden Teile des Dichtungsspaltes 17 und damit zu einer Separation in eine förderungsaktive Zone (ringförmiger Axialspalt 17b) und in eine förderungspassive Zone (zylindrischer Radialspalt 17a). Im ringförmigen Axialspalt 17b werden Wasser und Schmutzpartikel ständig durch die Zentrifugalkraft in Bezug auf die Rotationsachse nach außen befördert. Im zylindrischen Radialspalt 17a jedoch wird weder eine Bewegung in Richtung Rad noch in Richtung Fahrzeug bevorzugt.

Als besonders dichtungswirksam kann sich der Radialspalt 17c erweisen, der zumindest teilweise den ebenfalls zylindrischen Radialspalt 17a umfasst und in ähnlicher Weise eine förderungspassive Zone darstellt. Der Radialspalt 17c kann jedoch nicht nur zylindrisch (wie gezeigt), sondern auch konisch ausgeführt werden, wobei der Eintritt von Wasser oder Schmutzpartikeln im Mündungsbereich 24 des Dichtungsspaltes 17 weiter durch eine entsprechende Anstellung gegenüber der Rotationsachse unterdrückt werden kann. Derartige Anstellwinkel können von 0° bis 90° variieren, wobei sich der Radialspalt 17c im Mündungsbereich gegebenenfalls erweitert oder verengt. Wichtig ist, dass Wasser oder Schmutzpartikel aus der Auffangrinne 13 nicht ohne Weiteres in den Dichtungsspalt 17 gelangen können.

In der Figur 2 gezeigten Ausführungsform wird in Kombination mit der Gelenkglocke 32, beziehungsweise mit deren einstückig angeformten zylindrischen Abdichtung 16, eine teilweise halbkreisförmige Spaltführung des Dichtungsspaltes 17 erreicht. Diese Spaltführung kann hierbei eine oder mehrere Richtungsänderungen von axialen zu radialen beziehungsweise von radialen zu axialen Richtungen enthalten, womit ein Durchdringen von Umwelteinflüssen zur getriebeseitigen (rechten) Dichtungsanordnung 3 und damit zum Radlager selbst ohne jeglichen schleifenden Dichtungsbestandteil zusätzlich erschwert wird.

Vorteilhafterweise ist der Dichtungsspalt 17 in radialer Richtung schleifen-, s-förmig oder schlangenlinienähnlich ausgebildet, um die Umwelteinflüsse weiter zu mindern. Ausschlaggebend hierbei ist die Tatsache, dass Schmutzpartikel nicht nur in axialer Richtung wandern müssen, sondern auch radial, das heißt abwechselnd mit, beziehungsweise gegen, die Zentrifugalkräfte der rotierenden Gelenkglocke 32. Hierbei werden die Eigenschaften Abschirmen, Drosseln, Abweisen und Umlenken von Flüssigkeiten sehr vorteilhaft verwendet, um die besagten Flüssigkeiten mit den in diesen enthaltenen Schmutzpartikeln abzuhalten.

Vorteilhafterweise bildet ein zylindrischer Fortsatz 15 der zylindrischen Abdichtung 16 zusammen mit dem zylindrischen Fortsatz 14 des Radträgers 1 eine Mündung des Dichtungsspaltes 17 in die Auffangrinne 13. Daran ist zunächst einmal vorteilhaft, dass mit dem Fortsatz 15 eine Abdeckung des Dichtungsspaltes 17 in radialer Richtung bewerkstelligt wird. Weiter ist vorteilhaft, dass Schmutzpartikel und Wasser zuerst in der Auffangrinne 13 gesammelt werden, bevor sie überhaupt in die Nähe der Mündungsöffnung, das heißt an den Fortsätzen 15,17 vorbei, in den Dichtungsspalt 17 gelangen könnten. Dabei ist unerheblich, ob die Schmutzpartikel über die abdeckende, zylindrische Abdichtung 16, beziehungsweise deren zylindrischen Fortsatz 15 in die Auffangrinne 13 gelangen, oder am Radträger 1 entlang nach unten in Richtung Fahrbahn wandern um letztlich in die Auffangrinne 13 gelangen.

Vorteilhaft an diesem Ausführungsbeispiel ist auch die geringe Anzahl von Bauteilen, die zu der Vordichtungsanordnung verwendet werden. Im Grunde sind keine neuen Bauteile notwendig, wenn die dichtungsspaltformenden Teile einstückig mit der Gelenkglocke 32 und dem Radträger 1 verbunden sind.

Es ist ebenso denkbar, wenn man beispielsweise auf ein geringes Gewicht der Gelenkglocke 32 bedacht ist, nur den Radträger 1 auszuformen, bereits durch das Vorhandensein der Auffangrinne 13 und auch einer vorteilhaften Nähe zu einer herkömmlichen Gelenkglocke, eine Vordichtungswirkung zu erzielen. Dadurch ist es möglich übliche Gelenkglocken anstatt der gezeigten Gelenkglocke 32 zu verwenden und dennoch eine gewisse Vordichtung zu erzielen.

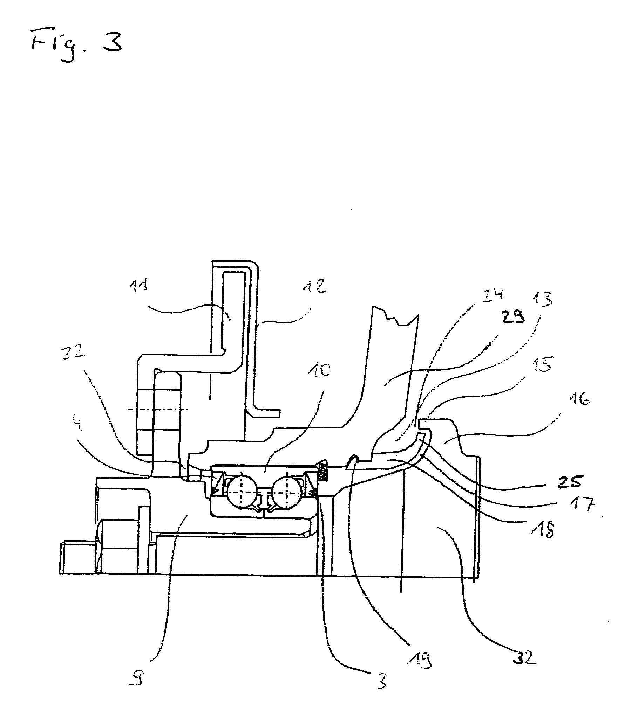

Fig. 3 zeigt eine geschnittene Ansicht einer erfindungsgemäßen Radlageranordnung mit einer Vordichtung basierend auf einem befestigbaren Auffangring 18.

Die Funktionsweise der Vordichtung ist in diesem Ausführungsbeispiel nicht anders als im vorangegangenen Ausführungsbeispiel, wobei die Auffangrinne 13 von einem befestigbaren Auffangring 18 gebildet wird, der in der gleichen Weise mit seiner Form vorteilhaft auf die Auffangeigenschaften der Auffangrinne 13 einwirken kann.

Vorteilhaft ist zudem, dass der Auffangring 18 nachgerüstet werden kann, indem mittels einer Schnappbefestigung 19, oder einer ähnlichen Befestigung dieser Art, eine leichte Installation am Radträger 29, beziehungsweise ein einfaches Austauschen ermöglicht wird. Wichtig aber ist, dass die Befestigung Umwelteinflüssen, insbesondere Wasser, Säuren und sonstigen Schmutzpartikeln in standhält, zumal der Auffangring 18 die Auffangrinne 13 bildet.

Ähnlich wie im vorherigen Ausführungsbeispiel bildet ein Fortsatz 25 des Auffangrings 18 zusammen mit dem Fortsatz 15 der zylindrischen Abdichtung 16 die Mündungsöffnungen die Dichtungsspaltes 17.

Vorteilhaft ist auch die Möglichkeit der Materialwahl des Auffangrings 18, der beispielsweise als Kunststoffring ausgeführt werden kann und somit keiner Korrosion unterliegt. Weitere Materialien sind in Abhängigkeit der Beständigkeit desselben verwendbar.

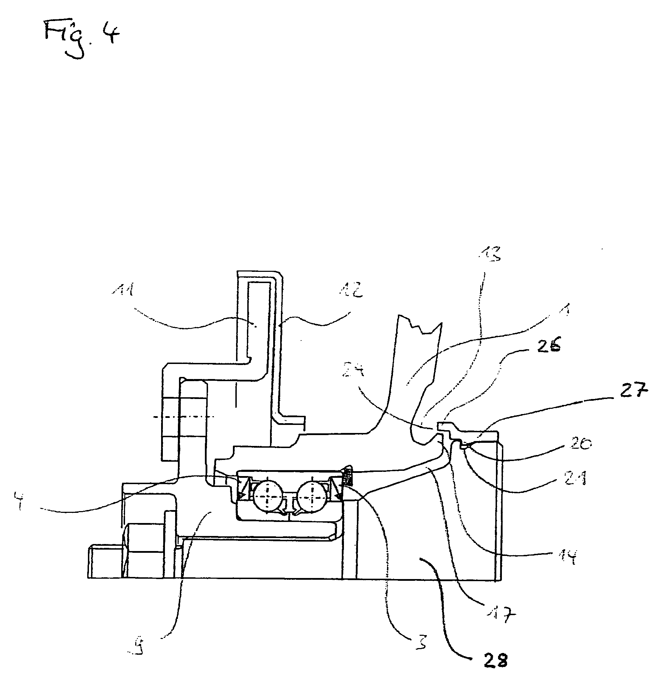

Fig. 4 zeigt eine geschnittene Ansicht einer erfindungsgemäßen Radlageranordnung mit einer Vordichtung basierend auf einem befestigbaren Dichtungselement 27.

Die Abdeckung des Dichtungsspaltes 17 wird durch ein befestigbares Dichtungselement 27 realisiert und die Mündung des Dichtungsspaltes 17 des Mündungsbereichs 24 durch den zylindrischen Fortsatz 14 des Radträgers 1 und den zylindrischen Fortsatz 26 des befestigbaren Dichtungselements 27 gebildet. Dabei weist das befestigbare Dichtungselement 27 einen radial innen liegenden Befestigungsring 20 auf, der auf die Gelenkglocke 28, beziehungsweise in deren Befestigungsrille 21 eingeschnappt werden kann. Damit erhält das befestigbare Dichtungselement 27 einen festen Halt und wird beim Betrieb weder radseitig noch getriebeseitig abwandern.

Abgesehen von der vorteil behafteten Befestigungsmethode erzielt das befestigbare Dichtungselement 27 die gleiche Dichtwirkung wie die zylindrische Abdichtung 16 (aus Figur 3).

Es wird darauf hingewiesen, dass die gelehrten Ausführungsbeispiele beziehungsweise deren Merkmale untereinander kombinierbar sind um zu anderen erfindungsgemäßen Weiterbildungen zu gelangen. Beispielsweise sind die Ausführungsbeispiele der Figuren 3 und 4 dahingehend kombinierbar, dass die vorteilhafte Radlageranordnung sowohl einen Auffangring 18 (aus Figur 4) und einen befestigbares Dichtungselement 27 (aus Figur 3) aufweist. Durch die Merkmalskombination entstehen erneut Synergien, wie zum Beispiel im genannten Fall eine vorteilhafte Nachrüstbarkeit der Vordichtung, zumal die dichtungsspaltbildenen und auffangrinnebildenden Teile nicht einstückig mit Radträger 29 und Gelenkglocke 28 verbunden sind und nachträglich eingesetzt, beziehungsweise ausgetauscht werden können. Vorteilhafterweise beschränkt sich die nachrüstbare Vordichtung auf einen Auffangring und eine zylindrische Abdeckung, die als separates Produkt angeboten werden können.

Eine weitere Kombinationsmöglichkeit der Ausführungsbeispiele der einzelnen Figuren besteht darin, dass ein Axialspalt 17b und zwei Radialspalte 17a, 17c, wie sie aus der Figur 2 bekannt sind, auch bei den anderen Ausführungsbeispielen der Figuren 3 und 4 entsprechend vorgesehen werden können, d.h., dass die dichtungsspaltbildenden Bauteile dementsprechend ihrer Form angepasst werden können.

Insoweit innerhalb einer Figurenbeschreibung Bezugszeichen der zugehörigen Figur nicht diskutiert werden, so gelten die Ausführungen zu dem bezeichneten Gegenstand aus den Figurenbeschreibungen der übrigen Figuren.

Zusammenfassend betrifft die Erfindung einen Radträger, der zur Aufnahme eines Außenringes eines Radlagers vorgesehen ist, und eine Radlageranordnung mit einem derartigen Radträger. Ziel ist es eine Dichtungsanordnungen des Radlagers durch eine Vordichtung zu entlasten, die als Labyrinthdichtung ausgeführt ist und aufgrund einer entsprechenden Spaltgeometrie eine vorteilhafte Vordichtungswirkung realisiert. Hierfür weist der Radträger eine Auffangrinne auf, die zum Auffangen und umfänglichen Ableiten von Flüssigkeiten und Schmutzpartikeln vorgesehen ist. Durch diese Maßnahme kann die Lagerdichtung so geändert werden, dass mit einem Minimum an Dichtwirkung der herkömmlichen Dichtungsanordnung und mit stark reduziertem Reibmoment Einsparungen möglich sind. Insgesamt erhöht sich die Dichtwirkung, die nunmehr durch die Lagerdichtung und die Vordichtung zusammen erzielt wird, oder bleibt bei niedrigeren Herstellungskosten zumindest auf dem gleichen Niveau.

### Bezugszeichenliste

- 1: Radträger
- 2: Gelenkglocke
- 3: getriebeseitige Dichtungsanordnung
- 4: radseitige Dichtungsanordnung
- 5: getriebeseitiger Innenring
- 6: radseitige Innenring
- 7: getriebeseitige Wälzkörperreihe
- 8: radseitige Wälzkörperreihe
- 9: Radnabe
- 10: Außenring
- 11: Bremsscheibe
- 12: Schutzblech
- 13: Auffangrinne
- 14: zylindrischer Fortsatz des Radträgers
- 15: zylindrischer Fortsatz des Dichtelementes
- 16: zylindrische Abdichtung
- 17: Dichtungsspalt
- 17c: Radialspalt
- 18: Auffangring
- 19: Schnappbefestigung
- 20: Befestigungsring
- 21: Befestigungsrille
- 22: radseitiger Spalt
- 23: getriebeseitiger Spalt
- 24: Mündungsbereich des Dichtungsspaltes
- 25: Fortsatz des Auffangrings
- 26: zylindrischer Fortsatz des befestigbaren Dichtungselementes
- 27: befestigbares Dichtungselement
- 28: Gelenkglocke
- 31: Radträger
- 32: Gelenkglocke

## Patentansprüche

1. Radträger (1,29,31), der zur Aufnahme eines Außenringes (10) eines Rad!agers vorgesehen ist, **dadurch gekenntzeichnet**, da s s der Radträger (1,29) zum Schutz einer Dichtungsanordnung (3,4) des Radlagers eine Auffangrinne (13) aufweist, die zum Auffangen und umfänglichen Ableiten von Flüssigkeiten vorgesehen ist.

2. Radträger (1,29) nach Anspruch 1, wobei die Auffangrinne (13) getriebeseitig am Radträger (1,29), in der Nähe einer getriebeseitigen Dichtungsanordnung (3) angeformt oder befestigt ist.

3. Radträger nach einem der Ansprüche 1 oder 2, wobei eine radseitige Auffangrinne am Radträger in der Nähe einer radseitigen Dichtungsanordnung (4) angeformt oder befestigt ist.

4. Radlageranordnung mit einem Radträger (1,29) nach einem der vorhergehenden Ansprüche, einer Radnabe (9) und einer mit der Radnabe (9) verschraubbaren Gelenkglocke (2,28,32), wobei der Radträger (1,29) mit der Radnabe (9) und/oder der Radträger (1,29) mit der Gelenkglocke (2,28,32) einen Dichtungsspalt (17) bildet.

5. Radlageranordnung nach Anspruch 4, wobei der Dichtungsspalt (17) in die Auffangrinne (13) des Radträgers (1,29) mündet.

6. Radlageranordnung nach Anspruch 5, wobei die Mündung des Dichtungsspaltes (17) von einem zylindrischen Fortsatz (14) des Radträgers (1,29) gebildet wird, dessen maximale radiale Entfernung von einer Drehachse des Radlagers größer ist, als die kleinste radiale Entfernung der Auffangrinne (13).

7. Radlageranordnung nach Anspruch 5 oder 6, wobei der Dichtungsspalt (17) in der Nähe eines Mündungsbereichs (24) im Wesentlichen parallel zur Drehachse des Lagers angeordnet ist.

8. Radlageranordnung nach einem der Ansprüche 5 oder 6, wobei der Dichtungsspalt (17) in der Nähe des Mündungsbereichs (24) zur Drehachse des Radlagers hin orientiert ist.

9. Radlageranordnung nach einem der Ansprüche 4 bis 8, wobei die Gelenkglocke (2,28,32) eine zylindrische Abdichtung (16) aufweist, welche zur Bildung des Dichtungsspaltes (17) in der Nähe des Mündungsbereichs (24) vorgesehen ist.

10. Radlageranordnung nach einem der Ansprüche 4 bis 8, wobei die Gelenkglocke (2,28,32) ein befestigbares Dichtungselement (27) aufweist, welches zur Bildung des Dichtungsspaltes (17) in der Nähe des Mündungsbereichs (24) vorgesehen ist.

11. Radlageranordnung nach einem der vorhergehenden Ansprüche, wobei die Radnabe (9) einen zylindrischen Fortsatz aufweist, der zur Bildung des Dichtungsspaltes (17) in der Nähe dessen Mündungsbereiches (24) vorgesehen ist.

12. Vordichtung zum Schutz einer Dichtungsanordnung (3,4) eines Radlagers, wobei die Vordichtung einen Rinnenring (18) aufweist, der zumindest teilweise eine Auffangrinne (13) bildet und zur Befestigung an einem Radträger (29) vorgesehen ist.

13. Vordichtung nach Anspruch 12, wobei die Vordichtung ein Dichtungselement (27) aufweist, welches an einer Gelenkglocke (28) oder einer Radnabe des Radlagers befestigbar ist und zumindest teilweise die auf die Auffangrinne (13) gerichtete Mündung des Dichtungsspaltes (17) bildet.

## Claims

1. Hub carrier (1, 29, 31), which is provided for the purpose of receiving an outer ring (10) of a wheel bearing, **characterized in that**, to protect a seal arrangement (3, 4) of the wheel bearing, the hub carrier (1, 29) has a collecting channel (13), which is provided for the purpose of catching liquids and carrying them away circumferentially.

2. Hub carrier (1, 29) according to claim 1, wherein the collecting channel (13) is formed on or fastened to the hub carrier (1, 29) on the gear side, in the vicinity of a gear-side seal arrangement (3).

3. Hub carrier according to either of claims 1 or 2, wherein a wheel-side collecting channel is formed on or fastened to the hub carrier in the vicinity of a wheel-side seal arrangement (4).

4. Wheel bearing arrangement having a hub carrier (1, 29) according to one of the preceding claims, a wheel hub (9) and a joint bell (2, 28, 32), which can be screwed to the wheel hub (9), wherein the hub carrier (1, 29) forms a seal gap (17) with the wheel hub (9) and/or the hub carrier (1, 29) forms a seal gap (17) with the joint bell (2, 28, 32).

5. Wheel bearing arrangement according to Claim 4, wherein the seal gap (17) opens into the collecting channel (13) of the hub carrier (1, 29).

6. Wheel bearing arrangement according to Claim 5, wherein the mouth of the seal gap (17) is formed by a cylindrical extension (14) of the hub carrier (1, 29), the maximum radial distance of which from an axis of rotation of the wheel bearing is greater than the smallest radial distance of the collecting channel (13).

7. Wheel bearing arrangement according to Claim 5 or 6, wherein the seal gap (17) is arranged substantially parallel to the axis of rotation of the bearing in the vicinity of a mouth region (24).

8. Wheel bearing arrangement according to either of Claims 5 or 6, wherein the seal gap (17) is oriented toward the axis of rotation of the wheel bearing in the vicinity of the mouth region (24).

9. Wheel bearing arrangement according to one of Claims 4 to 8, wherein the joint bell (2, 28, 32) has a cylindrical seal (16), which is provided in the vicinity of the mouth region (24) in order to form the seal gap (17).

10. Wheel bearing arrangement according to one of Claims 4 to 8, wherein the joint bell (2, 28, 32) has a fastenable seal element (27), which is provided in the vicinity of the mouth region (24) in order to form the seal gap (17).

11. Wheel bearing arrangement according to one of the preceding claims, wherein the wheel hub (9) has a cylindrical extension, which is provided in the vicinity of the mouth region (24) of the seal gap in order to form the seal gap (17).

12. Pre-seal for protecting a seal arrangement (3, 4) of a wheel bearing, wherein the pre-seal has a channel ring (18) which at least partially forms a collecting channel (13) and is provided for fastening to Hub carrier (29).

13. Pre-seal according to Claim 12, wherein the pre-seal has a seal element (27) which can be fastened to a joint bell (28) or to a wheel hub of the wheel bearing and at least partially forms the mouth of the seal gap (17), which is oriented toward the collecting channel (13).

## Revendications

1. Support de roue (1, 29, 31) prévu pour recevoir une bague extérieure (10) d'un palier de roue, **caractérisé en ce que** le support de roue (1, 29) présente une rainure de réception (13) pour protéger un agencement de joint d'étanchéité (3, 4) du palier de roue, laquelle rainure de réception est prévue pour recevoir les liquides et les évacuer par la périphérie.

2. Support de roue (1, 29) selon la revendication 1, dans lequel la rainure de réception (13) est façonnée ou fixée du côté de la transmission au support de roue (1, 29), à proximité d'un agencement de joint d'étanchéité (3) du côté de la transmission.

3. Support de roue selon l'une quelconque des revendications 1 ou 2, dans lequel une rainure de réception du côté de la roue est façonnée ou fixée sur le support de roue à proximité d'un agencement de joint d'étanchéité (4) du côté de la roue.

4. Agencement de palier de roue comprenant un support de roue (1, 29) selon l'une quelconque des revendications précédentes, un moyeu de roue (9) et une cloche de joint (2, 28, 32) pouvant être vissée au moyeu de roue (9), le support de roue (1, 29) formant avec le moyeu de roue (9) et/ou le support de roue (1, 29) formant avec la cloche de joint (2, 28, 32) une fente d'étanchéité (17).

5. Agencement de palier de roue selon la revendication 4, dans lequel la fente d'étanchéité (17) débouche dans la rainure de réception (13) du support de roue (1, 29).

6. Agencement de palier de roue selon la revendication 5, dans lequel l'embouchure de la fente d'étanchéité (17) est formée par une saillie cylindrique (14) du support de roue (1, 29), dont la distance radiale maximale à un axe de rotation du palier de roue est supérieure à la distance radiale la plus petite de la rainure de réception (13).

7. Agencement de palier de roue selon la revendication 5 ou 6, dans lequel la fente d'étanchéité (17) est disposée à proximité de la région d'embouchure (24) essentiellement parallèlement à l'axe de rotation du palier.

8. Agencement de palier de roue selon l'une quelconque des revendications 5 ou 6, dans lequel la fente d'étanchéité (17) est orientée à proximité de la région d'embouchure (24) en direction de l'axe de rotation du palier de roue.

9. Agencement de palier de roue selon l'une quelconque des revendications 4 à 8, dans lequel la cloche de joint (2, 28, 32) présente une garniture d'étanchéité cylindrique (16) qui est prévue pour former la fente d'étanchéité (17) à proximité de la région d'embouchure (24).

10. Agencement de palier de roue selon l'une quelconque des revendications 4 à 8, dans lequel la cloche de joint (2, 28, 32) présente un élément d'étanchéité (27) pouvant être fixé, qui est prévu pour former la fente d'étanchéité (17) à proximité de la région d'embouchure (24).

11. Agencement de palier de roue selon l'une quelconque des revendications précédentes, dans lequel le moyeu de roue (9) présente une saillie cylindrique qui est prévue pour former la fente d'étanchéité (17) à proximité de sa région d'embouchure (24).

12. Pré-joint pour la protection d'un agencement de joint d'étanchéité (3, 4) d'un palier de roue, le pré-joint présentant une bague de rainure (18) qui forme au moins en partie une rainure de réception (13) et qui est prévue pour la fixation sur un support de roue (29).

13. Pré-joint selon la revendication 12, dans lequel le pré-joint présente un élément d'étanchéité (27), qui peut être fixé sur une cloche de joint (28) ou un moyeu de roue du palier de roue, et qui forme au moins en partie l'embouchure de la fente d'étanchéité (17) orientée vers la rainure de réception (13).
